# EUROPEAN PATENT APPLICATION

(11) **EP 1 241 387 A1**
(43) Date of publication of application: **18.09.2002**
(21) Application number: 02006015.8
(22) Date of filing: 15.03.2002
(51) Int. Cl.: F16K 31/06

(54) **Electromagnetically controlled three-way valve**

(30) Priority: 16.03.2001 IT BO010145
(71) Applicant: MAGNETI MARELLI POWERTRAIN S.p.A., 10138 Torino (IT)
(72) Inventor: Cristiani, Marcello, 40026 Imola (IT); Vignoli, Mirco, 40100 Bologna (IT)
(74) Representative: Cerbaro, Elena, Dr.

(57) **Abstract**

An electrically controlled three-way valve (1) comprising a valve body (2), within which a central cavity (3) and a respective first, second and third connection duct (4, 5, 6), adapted to bring the central cavity (3) into communication with atmosphere, are provided, and a shutter member (7) mounted to move within the central cavity (3) between a first operating position, in which the shutter member (7) is disposed to close the inlet of the first duct (4) so as to obstruct this first duct (4) in a leak-tight manner and to bring the second duct (5) into sole communication with the third duct (6), and a second operating position in which the shutter member (7) is disposed to close the inlet of the third duct (6) in order to obstruct this third duct (6) in a leak-tight manner and to bring the second duct (5) into sole communication with the first duct (4); the shutter member (7) being of spherical shape and independent from any other member of the valve (1) so that it can move freely within the central cavity (3); the central cavity (3) being shaped such that the shutter member (7) is forced simultaneously to engage the inlets (4a, 6a) of the first and the third connection ducts (4, 6), but obstructs, however, only one of the first and third connection ducts (4, 6) in a leak-tight manner.

## Description

The present invention relates to an electrically controlled three-way valve.

The present invention relates more particularly to an electrically controlled three-way valve to be used in the production of electro-hydraulic devices for the movement of the intake and exhaust valves of latest-generation internal combustion engines, to which use the following description makes explicit reference without entering into superfluous detail.

As is known, electro-hydraulic devices able to actuate the intake and exhaust valves of internal combustion engines have been developed in recent years as a replacement for camshafts. In the electro-hydraulic devices currently being tested, the flow of pressurised oil to the hydraulic actuators that control the displacement of the valves of the internal combustion engine is regulated by a series of high-speed electrovalves which, taken in pairs, simulate the operation of electrically controlled three-way valves of conventional type.

The three-way valves known at present have the major drawback that they are very bulky and, even more importantly, do not offer switching times that are low enough to satisfy the operating specifications required for assembly in the electro-hydraulic devices that supervise the movement of the intake and exhaust valves of internal combustion engines.

As is known, the three-way valves known at present comprise a valve body, in which a central cavity and three connection ducts, each of which brings the cavity into communication with atmosphere, are provided, and a shutter member which is mounted to move in the central cavity so as to be able alternately to close the inlet of two of the three connection ducts so as to bring the third connection duct into sole communication with one or other of the first two ducts.

In this particular case, two of the three connection ducts face the central cavity on opposite sides of the shutter member, while the shutter member is secured to the end of a support rod which is mounted in an axially moving manner through the body of the valve in a direction intersecting the inlets of the two connection ducts that face the interior of the central cavity on opposite sides of the shutter member, so as to be able to position the shutter member alternately to close the inlet of one or other of the two connection ducts mentioned above.

It will be appreciated that, as a result of its inertia, the assembly formed by the support rod and the shutter member does not make it possible to achieve particularly low switching times and is not able to provide the reliability and service life compatible with automotive uses.

The object of the present invention is therefore to provide an electrically controlled three-way valve free from the above-described drawbacks.

The present invention therefore relates to an electrically controlled three-way valve comprising a valve body, within which a cavity and a respective first, second and third connection duct, adapted to bring the central cavity into communication with atmosphere, are provided, and a shutter member which is mounted to move within the central cavity between a first operating position, in which the shutter member is disposed to close the inlet of the first duct so as to obstruct this first duct in leak-tight manner and to bring the second duct into sole communication with the third duct, and a second operating position in which the shutter member is disposed to close the inlet of the third duct in order to obstruct this third duct in a leak-tight manner and to bring the second duct into sole communication with the first duct; this three-way valve being characterised in that the shutter member is independent from any other member of the valve and is mounted to move freely within the central cavity, and in that the central cavity is shaped such that the shutter member is forced simultaneously to engage the inlets of the first and the third connection ducts, but obstructs, however, only one of these first and third connection ducts in a leak-tight manner.

The present invention will be described below with reference to the accompanying drawings, which show a non-limiting embodiment thereof, in which:
Fig. 1 is a sectional view, with some parts removed for clarity, of an electrically controlled three-way valve according to the present invention;
Fig. 2 is a view on an enlarged scale of a detail of the three-way valve of Fig. 1.

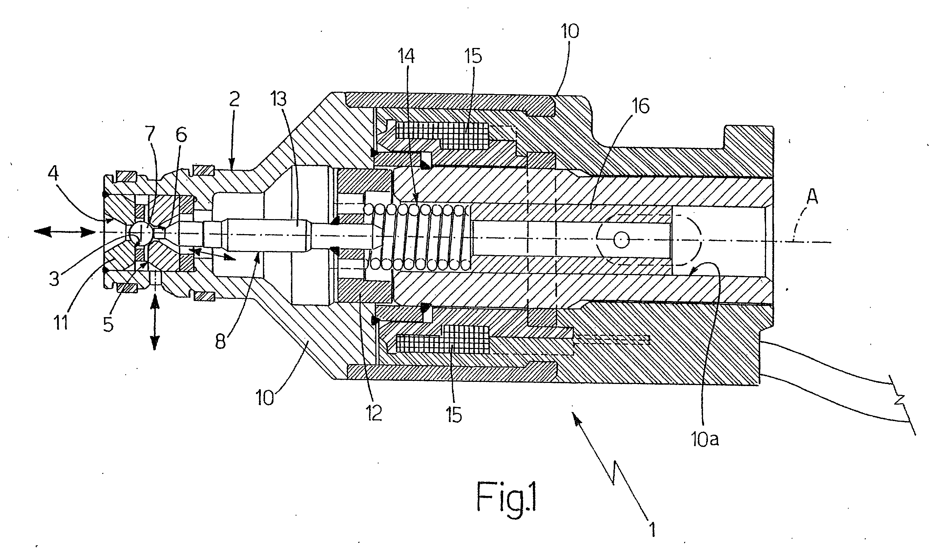

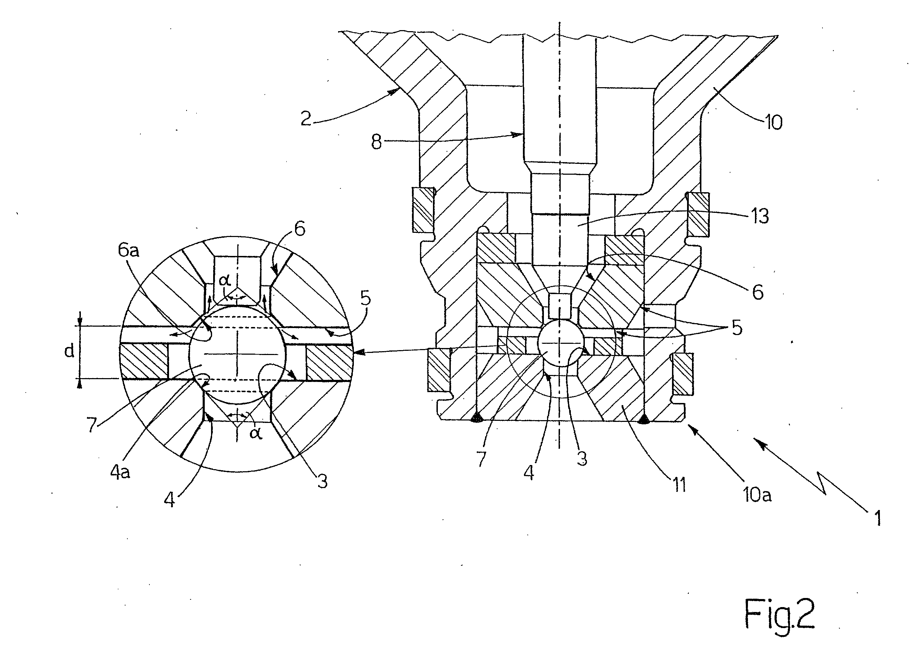

In Figs. 1 and 2, an electrically controlled three-way valve particularly adapted for use in the electro-hydraulic devices that supervise the movement of the intake and exhaust valves of latest-generation internal combustion engines is shown overall by 1.

The valve 1 comprises a valve body 2, within which a central cavity 3 and three connection ducts 4, 5 and 6, each of which brings the central cavity 3 into communication with atmosphere, are provided, and a shutter member 7 which is mounted to move within the central cavity 3 between a first operating position (see Fig. 2), in which the shutter member 7 is disposed to close the inlet of the duct 4 so as to obstruct this duct 4 in a leak-tight manner and to bring the duct 5 into sole communication with the duct 6, and a second operating position, in which the shutter member 7 is disposed to close the inlet of the duct 6 so as to obstruct this duct 6 in a leak-tight manner and to bring the duct 5 into sole communication with the duct 4.

In further detail, the inlets of the ducts 4 and 6 face the central cavity 3 in alignment on opposite sides of the shutter member 7, while the shutter member 7 is formed by a spherical body or a body of substantially spherical shape preferably, but not necessarily, formed from a metal material, which is mounted to move freely within the central cavity 3 and is dimensioned such that it can alternately obstruct the inlet of the duct 4 or the inlet of the duct 6 in a leak-tight manner so as to prevent the flow of fluids to and from the central cavity 3.

It should be noted that, in contrast to the three-way valves known at present, the spherical body 7 is independent from any other member of the valve 1 and is therefore able to move freely within the central cavity 3 in any direction compatible, obviously, with the free space available within the central cavity 3.

The central cavity 3 is, moreover, shaped such that the shutter member 7, i.e. the spherical body 7, is forced simultaneously to engage the inlets of both the ducts 4 and 6, but obstructs, however, only one of these ducts 4 and 6 in a leak-tight manner.

In the embodiment shown, the inlet of the duct 4 and the inlet of the duct 6 are in particular both formed by a flared surface 4a, 6a of substantially frustoconical or funnel shape, on which the shutter member 7, i.e. the spherical body 7, is adapted to be disposed in abutment, partially engaging the space within this flared surface 4a, 6a. The flared surfaces 4a, 6a face and are coaxial with one another, and the central cavity 3 is shaped such that the distance d between the outer peripheral edge of the inlet of the duct 4 and the outer peripheral edge of the inlet of the duct 6 is smaller than the diameter of the spherical body 7, so that the spherical body 7 is forced to engage, with two diametrically opposite spherical portions, the space within the flared surface 4a and the space within the flared surface 6a. The distance d between the inlet of the duct 4 and the inlet of the duct 6 is, moreover, slightly greater than the minimum distance needed to lock the spherical body 7 simultaneously in abutment on both the flared surfaces 4a and 6a, so as to leave the spherical body 7 free to move within the central cavity 3.

In other words, the spherical body 7 may move freely within the central cavity 3, but the space available for displacements is so small as to allow the spherical body 7 to perform only displacements of very small size.

It will be appreciated that the shape of the two flared surfaces 4a and 6a, i.e. the aperture α of the cone that defines the two flared surfaces 4a and 6a, must be large enough to be able to receive the spherical body 7 at least partially in its interior. In other words, the cone that defines the two flared surfaces 4a and 6a must be large enough for the contact between the spherical body 7 and the flared surface 4a, 6a to take place along a circumference positioned within the flared surface 4a, 6a. This geometry of the two flared surfaces 4a, 6a in practice enables the spherical body 7 to be self-centred in the flared surface 4a or 6a, when it is closing the inlet of the duct 4 or 6 in a leak-tight manner.

With reference to Figs. 1 and 2, the valve 1 is lastly provided with a retractile pressure member 8 which is able, on command, temporarily to project within the central cavity 3 via the inlet of the duct 6 and to be disposed in abutment on the shutter member 7, i.e. on the spherical body 7, so as to distance it from the flared surface 6a and urge it into abutment against the flared surface 4a so as to close the inlet of the duct 4 in a leak-tight manner.

In this particular case, the valve 1 is provided with a retractile rod or strut 8, which extends coaxially with the axis of the two flared surfaces 4a and 6a, immediately downstream of the inlet of the duct 6 and is able to perform, on command, a temporary axial displacement towards the interior of the central cavity 3 so that its point temporarily projects within the flared surface 4a in order to urge the shutter member 7 into the first operating position and maintain it in this position.

It should be noted that the retractile rod or strut 8 does not necessarily have to extend coaxially with the two flared surfaces 4a, 6a, but that it is enough for it, in its alternate axial movement, to be able to urge and maintain the shutter member 7 in abutment against the flared surface 4a so as to close the inlet of the duct 4 in a leak-tight manner.

Displacement from the first to the second operating position takes place, however, under the effect of the pressure exerted by the fluid contained in the duct 4: when the retractile pressure member 8 is no longer in abutment on the shutter member 7, i.e. on the spherical body 7, the pressurised fluid contained in the duct 4 displaces, as it flows into the central cavity 3, the shutter member 7 from the first operating position and, in view of the small space available, cannot but urge it into abutment against the flared surface 6a so as to close the inlet of the duct 6 in a leak-tight manner, i.e. in the second operating position, in order then to flow out of the central cavity 3 via the duct 5.

In Figs. 1 and 2, in view of the particular geometry of the central cavity 3 and the small size of the displacements that the shutter member 7 can freely perform within the central cavity 3, the axial stroke required from the retractile pressure member 8 is particularly small and is comparable with the axial stroke required from the shutter pin of any fuel injector, as a result of which it is particularly advantageous to use a constructional geometry for the valve 1 that is similar to that of the fuel injectors known at present.

For the above purposes, the valve body 2 comprises an elongate tubular member 10 having a through duct 10a of variable diameter, which extends coaxially with the longitudinal axis A of the elongate tubular member 10 over the entire length of this tubular member 10 and a closure cap 11 of substantially cylindrical shape secured in a non-detachable way to an axial end of the elongate tubular member 10 so as to close the through duct 10a in a leak-tight manner.

The central cavity 3 and the ducts 4, 5 and 6 are provided within the closure cap 11 such that the central cavity 3 and the ducts 4 and 6 are coaxial with the axis A of the elongate tubular member 10, with the duct 4 facing outwards and the duct 6 facing, and in direct communication with, the through duct 10a of the elongate tubular member 10. The duct 5, in contrast, extends through the body of the closure cap 11 and through the lateral wall of the elongate tubular member 10 in a direction preferably, but not necessarily, perpendicular to the axis A, in order to bring the central cavity 3 into communication with atmosphere.

The shutter member 7, i.e. the spherical body 7, is obviously mounted to move freely within the central cavity 3 and is dimensioned such that it can alternately obstruct, in a leak-tight manner, the inlet of the duct 4, i.e. the flared surface 4a, or the inlet of the duct 6, i.e. the flared surface 6a, so as to prevent the flow of fluids from and to the central cavity 3.

In Fig. 1, it should be noted that the elongate tubular member 10 is formed, in the embodiment shown, by a series of tubular segments appropriately coupled together.

The retractile pressure member 8 is formed, however, by a bushing 12 of ferromagnetic material mounted to move axially within the section of the through duct 10a of greater diameter and by a needle or pin 13 extending in a projecting manner from the bushing 6 to the closure cap 11 coaxially with the axis A.

When the retractile pressure member 8 is in the forward or extracted position, the point of the pin 13 passes through the duct 6 and, projecting within the flared surface 6a, is disposed in abutment on the shutter member 7, i.e. on the spherical body 7, detaching it from the flared surface 6a and urging it into abutment against the flared surface 4a in order to close the inlet of the duct 4 in a leak-tight manner.

The axial movement of the retractile pressure member 8, i.e. of the assembly formed by the bushing 12 and the needle or pin 13 is, however, produced by means of an elastic opposition member 14 which is adapted to maintain the retractile pressure member 8 in the above-mentioned advanced or extracted position, and by means of a coil 15 of electrically conducting material keyed on the elongate tubular member 10 so as to be coaxial with the longitudinal axis A of this elongate tubular member 10.

When electric current passes through it, the coil 15 is adapted to generate a magnetic field able to overcome the elastic force of the elastic member 14 and axially to move the retractile pressure member 8 towards the coil 15 so as to displace the point of the needle or pin 13 out of the central cavity 3 or rather the flared surface 6a.

In other words, the retractile pressure member 8 moves axially under the action of opposing elastic and electromagnetic forces generated by the elastic member 14 and the coil 15 respectively.

The elastic member 14 is formed by a helical spring 14 disposed in the through duct 10a coaxial with the axis A, with a first end in abutment on the bushing 12 and a second end in abutment on a shoulder provided in the through duct 10a.

In the embodiment shown, this shoulder is formed by the axial end of a spring urging body 16 inserted within the through duct 10a on the side opposite to the needle or pin 13 with respect to the bushing 6.The spring urging body 16 is an integral part of the elongate tubular member 10, is of cylindrical tubular shape and is preferably, but not necessarily, formed from ferromagnetic material.

The operation of the electrically controlled three-way valve 1 can be readily deduced from the above description and requires no further explanation.

The advantages of the valve 1 are evident: in view of the extremely small mass of the shutter body 7 and the small size of the displacements needed to move from the first to the second operating position and vice versa, the switching times of the three-way valve 1 are some orders of magnitude lower than the three-way valves known at present, making it possible to use them in the electro-hydraulic devices that supervise the movement of the intake and exhaust valves of latest-generation internal combustion engines.

A further advantage of the electrically controlled three-way valve 1 described above is that its production costs are particularly low: its structure is in practice very similar to that of fuel injectors, with the result that the machinery used to produce these fuel injectors can be used for its production.

The main constructional differences between the valve 1 and a fuel injector are in practice concentrated in the closure cap 11 which, in fuel injectors, is replaced by a spray nozzle, i.e. by a disc with a calibrated central hole disposed to close the through duct 10a of the elongate tubular member 10.

It will be appreciated that modifications and variations may be made to the electrically controlled three-way valve 1 as described and illustrated without thereby departing from the scope of the present invention.

## Claims

1. An electrically controlled three-way valve (1) comprising a valve body (2), within which a central cavity (3) and a respective first, second and third connection duct (4, 5, 6), adapted to bring the central cavity (3) into communication with atmosphere, are provided, and a shutter member (7) which is mounted to move within the central cavity (3) between a first operating position, in which the shutter member (7) is disposed to close the inlet of the first duct (4) so as to obstruct this first duct (4) in a leak-tight manner and to bring the second duct (5) into sole communication with the third duct (6), and a second operating position in which the shutter member (7) is disposed to close the inlet of the third duct (6) in order to obstruct this third duct (6) in a leak-tight manner and to bring the second duct (5) into sole communication with the first duct (4), the three-way valve (1) being **characterised in that** the shutter member (7) is independent from any other member of the valve (1) and is mounted to move freely within the central cavity (3), and **in that** the central cavity (3) is shaped such that the shutter member (7) is forced simultaneously to engage the inlets (4a, 6a) of the first and the third connection ducts (4, 6), but obstructs, however, only one of the first and third connection ducts (4, 6) in a leak-tight manner.

2. A three-way valve as claimed in claim 1, **characterised in that** the inlet (4a) of the first connection duct (4) and the inlet (6a) of the third connection duct (6) face the central cavity (3) on opposite sides of the shutter member (7), the valve (1) further comprising a retractile pressure member (8) which is adapted to project, on command, within the central cavity (3) through the inlet (6a) of the third connection duct (6) in order to be disposed in abutment on the shutter member (7) so as to urge it into abutment against the inlet (4a) of the first connection duct (4) so as close it in a leak-tight manner.

3. A three-way valve as claimed in any one of the preceding claims, **characterised in that** the inlet (4a) of the first connection duct (4) is formed by a flared surface (4a) on which the shutter member (7) is adapted to be disposed in abutment, partially engaging the space inside this flared surface (4a).

4. A three-way valve as claimed in any one of the preceding claims, **characterised in that** the inlet (6a) of the third connection duct (6) is formed by a flared surface (6a) on which the shutter member (7) is adapted to be disposed in abutment, partially engaging the space inside this flared surface (6a).

5. A three-way valve as claimed in any one of the preceding claims, **characterised in that** the shutter member (7) is substantially spherical in shape.

6. A three-way valve as claimed in claim 6, **characterised in that** the central cavity (3) is shaped such that the distance (d) between the outer peripheral edge of the inlet (4a) of the first duct (4) and the outer peripheral edge of the inlet (6a) of the third duct (6) is smaller than the diameter of the shutter member (7).

7. A three-way valve as claimed in any one of claims 2 to 6, **characterised in that** the retractile pressure member (8) comprises a rod or strut (8) which is positioned immediately downstream of the inlet (6a) of the third duct (6) and is able to perform, on command, an axial displacement towards the interior of the central cavity (3) so as temporarily to project inside the central cavity (3) with its point disposed in abutment on the shutter member (7).

8. A three-way valve as claimed in any one of the preceding claims, **characterised in that** the valve body (2) comprises an elongate tubular member (10) having a through duct (10a) which extends over the entire length of this tubular member (2), and a closure cap (11) secured in a non-detachable manner to an axial end of the elongate tubular member (10) so as to close the through duct (10a) in a leak-tight manner, the central cavity (3) and the first, second and third connection ducts (4, 5, 6) being provided within the closure cap (11) such that the central cavity (3) and the first and the third ducts (4, 6) are coaxial with the longitudinal axis (A) of the elongate tubular member (10), with the first duct (4) facing outwards and the third duct (6) facing, and in direct communication with, the through duct (10a) of the elongate tubular member (10).

9. A three-way valve as claimed in claim 8, **characterised in that** retractile pressure member (8) is mounted in an axially moving manner within the through duct (10a) of the elongate tubular member (10).

10. A three-way valve as claimed in any one of claims 2 to 9, **characterised in that** the retractile pressure member (8) moves axially under the effect of elastic and electromagnetic forces.

11. A three-way valve as claimed in claim 10, **characterised in that** the retractile pressure member (8) comprises a bushing (12) of ferromagnetic material mounted to move axially within the through duct (10a) and a needle or pin (13) extending in a projecting manner from the bushing (6) to the closure cap (11) coaxially with the longitudinal axis (A) of the elongate tubular member (10).
